# EUROPEAN PATENT SPECIFICATION

(11) **EP 0 701 052 B1**
(45) Date of publication and mention of the grant of the patent: **16.07.2003**
(21) Application number: 94306663.9
(22) Date of filing: 12.09.1994
(51) Int. Cl.: F02M 9/14, F02D 35/00

(54) **Apparatus for supplying an air-fuel mixture to an internal combustion engine**
Vorrichtung für die Zuführung einer Luft-Kraftstoffmischung an eine Brennkraftmaschine
Dispositif d'alimentation d'un mélange air-combustible à un moteur à combustion interne

(43) Date of publication of application: 13.03.1996
(73) Proprietor: Abbey, Harold George, Wellington, Florida 33414 (US)
(72) Inventor: Abbey, Harold George, Wellington, Florida 33414 (US)
(74) Representative: Abbie, Andrew Kenneth

(56) References cited:
- EP-A- 0 124 666
- DE-A- 2 625 815
- US-A- 4 187 805
- US-A- 4 308 835
- US-A- 4 387 685
- US-A- 4 895 184

## Description

The invention relates generally to fueling systems for internal combustion engines and more particularly to air-intake metering and control of fuel quantity in proportion thereto.

Prior art relating to the metering of air flow by mechanical air flow sensors utilized in fuel injection systems for spark ignition internal combustion engines in automotive application for control of fuel quantity in optimum ratio thereto have been of two principal types.

The major components of one such system are the pivotally arranged baffle plate in an air funnel, whose movements actuate the control piston of a fuel quantity and distributing valve to fuel injectors.

The major components of another type system are "an air flow sensor flap", in essence of pivoting vane in a "measuring duct" section together with a "compensation flap" an integral part of the sensor flap in a chamber aside from the airflow path. Both devices have flat plane upstream surfaces that measure the force of the impinging air stream by the counteracting force of a "return spring" or fuel pressure force regulated by engine manifold pressure.

A flat baffle plate in a restricted section of the intake tube is the metering sensor of the Mercedes-Benz Continuous Injection System (CIS), and the Bosch K-Jetronic fuel injection system.

The pivoting vane and flap are transduced to electric switching and signal to microprocessor control of solenoid operated injectors constituting the air flow sensor of the Bosch L-Jetronic fuel injection system.

In both systems, the use of a flat surface of a baffle plate or vane reacting to impinging air flow conditions requires empirical solutions and auxiliary systems for the effects of turbulence and non-linear outputs at a steady state of flow conditions and particularly during transitional conditions of acceleration and deceleration by throttle control of airflow. This causes fluctuation and oscillation from the effects of differential pressure on the relatively large flow impeding surfaces before and after airflow is accelerated or retarded to the steady state condition.

Also in use are electronic meters such as "hot wire" and "sonic" sensing for operation in conjunction with microprocessors in systems designated as Electronic Fuel Injection (EFI).

All such metering systems presently in use for "fuel injection" systems are in conjunction with devices or systems for control of fuel quantity by controlling fuel pressure to pressure-atomizing injectors (continuous injection) and for intermittent discharge of electric injectors under constant fuel pressure (Electronic Fuel Injection) both systems injecting into intake valve passages of individual cylinders (ported injection).

The applicant's US Patent No. 4387685 discloses the new "variable Venturi" structure technology wherein an element of the structure being a member movably supported in a tubular casing through which a fluid is caused to flow around or through and around said member, said member being contoured and streamlined, the forces engendered by said fluid flow on said member are governed by the laws and principles of fluid dynamics and similar to those of aerodynamics for atmospheric air.

When the moveable element of such structure is encompassed by an air stream and constrained to non-turbulent streamlined flow through Venturi-like passages, the force imposed by said air stream on such element urges such member downstream. When downstream movement by such force is opposed by a linear counterforce, the extent of displacement of the moveable member and the magnitude of countervailing force are outputs proportional to the mass-volume of air flow.

The parabolic contouring of such confined streamlined members to form Venturi-like passages whose cross-sectional area varies linearly with said members' movement also yields a differential air velocity pressure output taken from the varying throat section of such structures which differential-velocity pressure is proportionate to mass-volume of the prevailing air flow.

The above-referenced US patent discloses various shaped members which positioned in an air stream confined to a tubular duct which function as flow rate meters responsive to the aerodynamic force of the air stream on the structure's shaped members. The prevailing aerodynamic force being countervailed by a spring or the output of fuel pressure devices that balance with airflow force provides physical outputs that are a measure of air flow quantity. These outputs are: differential air pressure, called Venturi vacuum, the extent of displacement of the moveable element, and the magnitude of countervailing force, each of which are proportional to mass-volume of the air flow.

An air metering system in accordance with US 4387685 is applicable to spark-ignition internal combustion engines to proportion the ratio of combustion air to fuel, to maintain an optimum ratio thereof under varying conditions of load and speed throughout a wide operating range and for various systems of carburation and fuel injection.

Although the air metering structures of US 4387685 provide the function of metering the air for control of fuel in optimum ratio thereto and having the capability of introducing the fuel into the metered air stream by a single continuous injector discharging into an interior passage of the moveable member, they also serve for proportioning fuel control in fuel injection systems that control fuel into cylinder air intake passages (ported injection).

Operational control of internal combustion engines in automotive operation is by means of an arbitrarily actuated throttle valve in an air intake casing of an air intake manifold. The air metering devices and the structures of US 4387685 are in the intake casing upstream of the throttle valve and therefore subject to the pressure and velocity changes of the air flow that results from sudden or rapid throttle position change.

A body movably supported in a tubular casing, wherein an air stream is caused to flow therethrough encompassing the said body subjects the body to the following forces:
(a) impingement on the upstream projected surfaces by the change of direction of the stream flow. (F=MA).
(b) skin friction on the surfaces subjected to the flow.
   The air stream flowing through a tubular casing that confines the moveable body in a passage surrounding same introduces additional forces occurring when throttle induced changes airflow from steady state conditions. These are:
(c) the instant static pressure differential across the moveable body acting on the body before a steady state of air flow and member movement pertains.

Non-streamline shaped bodies such as flat and angles plates because of the sharp directional change of the flow stream yield a considerable impingement force causing turbulent flow and frictional resistance such forces being without functional relationship to the mass-volume of flow require empirical determinations to obtain a desirable result. Streamlined shapes and Venturi-like passages of structures wherein laminar airflow conditions are emanated eliminates impingement force and turbulence leaving only skin-friction which is negligible whereas the Venturi-like surrounding air passage adds the forces which are a function of mass-volume of air flow over such shapes.

Change of the state of airflow by throttle manipulation in such structures causes an instant differential static pressure force across the moveable member whose magnitude is a function of the proportions of projected surface areas of the moveable member to the flow-through area of the air passage(s) and of the magnitude of the structure's inertia which delays response of the system to a steady state condition consistent with the new throttle position.

Application of fueling systems to automotive engines requires adapting air-fuel mixture to steady state conditions of load and speed, and to the transitional conditions of acceleration and deceleration.

Efficient and smooth response to operational transitions without auxiliary means are desirable in the fluidic metering structures for use in combination with fuel controlling devices and systems for automotive engines.

The moveable members of variable Venturi structures are supported in the upstream "minimum-flow" position for movement in the downstream direction with increasing aerodynamic force as opposed by countervailing force. The shape of upstream entry surface and contours of moveable members of this invention are streamlined (approximate parabolically curved) for laminar air flow at and around the moveable member at non-turbulent velocities and through the air passage(s) which are always open and thereby minimize the effects of throttle valve manipulation on the member which creates a momentary change in the air pressure drop across the structure before such pressure drop and movement of the Venturi member stabilizes.

The fundamentals for metering and control by aerodynamic structures and variable Venturi passages are:
(1) A moveable member mounted for movement in a tubular casing, spaced therefrom to form an annular surrounding passage for an air stream whose shape and contour being streamlined and the airstream that flows through the passage encompassing the member being at non-turbulent velocity said member is subject to aerodynamic forces proportional to volume and mass (specific density) of the airstream flowing therethrough.
(2) A moveable member mounted for movement in a tubular casing forming a Venturi passage between its outer surface contour and the inner surface of the casing section surrounding the member and optionally containing an internal Venturi passage whereby an airstream flowing around the member and through the Venturi passage(s) produces differential-velocity pressure from the Venturi passage(s) of such structure said differential pressure output being proportional to the mass-volume of the air flow.
(3) The forces on the moveable member being countervailed by a linear spring or the output of fuel pressure devices that balance with airflow force and converging contours of entry to air passages being approximately parabolic to the restricted section of the passage whereby at a stationary tap in the casing the velocity-pressure of the air stream is directly proportional to downstream displacement of the moveable member thereby providing outputs which are linearly proportional to the mass-volume of the air flow, these being:
   a. displacement of the moveable member;
   b. differential velocity-pressure, (Venturi-vacuum);
   c. magnitude of countervailing force.

For the application of variable Venturi structures to fueling system of modern internal combustion engines the dimension and proportions of the moveable members and air passage are determined by the maximum volume of air requirements of a particular engine which is the product of displacement and maximum speed; and at a predetermined air velocity within non-turbulent limits. At the low and idle speed, the air quantity, is determined by turn down from the maximum, and is at a low air flow rate with reduced air stream velocity.

The desired response is achieved by the sizing of air passage for non-turbulent velocity at the maximum air flow requirement and the projected cross-sectional area of the moveable member at approximately fifty percent (50%) thereof.

It will be appreciated that US-A-4 387 685 discloses apparatus for supplying an air-fuel mixture to an internal combustion engine, said apparatus comprising:
(a) a tubular casing to be connected to an internal combustion engine to receive intake air to the engine;
(b) a moveable member coaxially mounted within said tubular casing and supported and spaced therein for downstream movement, said moveable member having streamlined upstream surfaces and contours which in conjunction with the interior surface contours of said casing define an annular parabolic Venturi passage in the space between said moveable member and said tubular casing, which passage is variable according to movement of said member, whereby the intake air stream admitted into the casing encompasses said member and flows through the said passage exerting aerodynamic force on said moveable member moving said member in the downstream direction; and
(c) means connected with said moveable member for providing countervailing force against downstream movement of said moveable member.

It is an object of this invention to provide an improved apparatus for. supplying an air-fuel mixture to an internal combustion engine.

Accordingly, the invention provides an apparatus for supplying an air-fuel mixture to an internal combustion engine, said apparatus comprising:
(a) a tubular casing to be connected to an internal combustion engine to receive intake air to the engine;
(b) a moveable member coaxially mounted within said tubular casing and supported and spaced therein for downstream movement, said moveable member having streamlined upstream surfaces and contours which in conjunction with the interior surface contours of said casing define an annular parabolic Venturi passage in the space between said moveable member and said tubular casing, which passage is variable according to movement of said member, whereby the intake air stream admitted into the casing encompasses said member and flows through the said passage exerting aerodynamic force on said moveable member moving said member in the downstream direction; and characterised by
(c) means connected with said moveable member for providing countervailing force against downstream movement of said moveable member;
(d) means to amplify the aerodynamic force on said moveable member, said amplifying means comprising a linkage means connected with said moveable member and said countervailing force means providing a mechanical advantage greater than 1:1 between said moveable member and said countervailing force means and
(e) fuel flow control means connected to said linkage means, whereby a light aerodynamic force on said moveable member by said intake air stream is amplified and input to said fuel flow control means as a control signal thereby providing a proper amount of fuel relative to an optimum ratio of air-fuel mixture linearly.

Preferably, the apparatus further comprises means for generating a force equivalent to a differential air pressure signal obtained from a pressure tap at a throat section of the variable Venturi passage and a pressure tap upstream thereof, said air pressure signal being input to said fuel flow control means as a control signal thereby providing a proper amount of fuel relative to an optimum ratio of air-fuel mixture linearly.

The countervailing force means may comprise spring means.

The fuel flow control means may provide countervailing force to said moveable member derived by feedback of discharge fuel pressure to said fuel flow control means.

The apparatus can be installed in an engine air induction system and applied to fuel quantity control from an engine driven or electric pump wherein said fuel flow control means is responsive to an output thereof and controls fuel pressure to atomizing injectors in intake air passages thereby providing optimum fuel-to-air ratio in a continuous multi-port fuel injection system for an internal combustion engine.

The fuel flow control means may comprise a single injector discharging into an interior passage of the moveable member.

The fuel flow control means may comprise injector means to be connected with fuel pump means, processor means for controlling said injector means and a transducer coupled with said linkage means and said processor means for providing an electrical signal to said processor means proportional to displacement of said moveable member.

The apparatus may comprise processor means coupled with exhaust gas sensor means, a transducer actuated by said linkage means, and an electric motor, said motor being controlled by said processor means according to signals from said exhaust gas sensor means and said transducer for modulating air-fuel ratio of said apparatus.

The moveable member may be pivotally supported in said tubular casing for pivotal movement in response to airflow through the tubular casing.

Preferably, said moveable member is a cylindrical body with an interior central parabolic contour Venturi flow passage and has a cylindrical exterior surface which in conjunction with the interior surface of said tubular casing defines said annular parabolic Venturi passage whereby the intake air admitted into the tubular section of casing encompasses said moveable member and is divided and flows through the interior and annular passages exerting aerodynamic force on said moveable member moving said member in the downstream direction and said annular Venturi passage being variable with reference to said differential air pressure taps providing an air metering differential air pressure signal proportional to mass-volume of the intake air stream.

Said moveable member may be pivotally supported external to the tubular casing for pivotal movement.

The apparatus may further comprise diaphragm means connected with said linkage means for applying to said linkage means a force which is variable according to said pressure differential signal.

In order that the invention may be well understood, some embodiments thereof, which are given by way of example only, will now be described with reference to the accompanying drawings, in which:
Figure 1 is a side elevational view in cross-section of a first embodiment of apparatus for supplying an air-fuel mixture to an internal combustion engine;
Figure 2 is a top plan view of a portion of Figure 1;
Figure 3 is a schematic representation of the first embodiment in use;
Figure 4 is a side elevational view in cross section of a second embodiment of apparatus for supplying an air-fuel mixture to an internal combustion engine;
Figure 5 is a top plan view of a portion of Figure 4;
Figure 6 is a side elevational view in cross section of a third embodiment of apparatus for supplying an air-fuel mixture to an internal combustion engine;

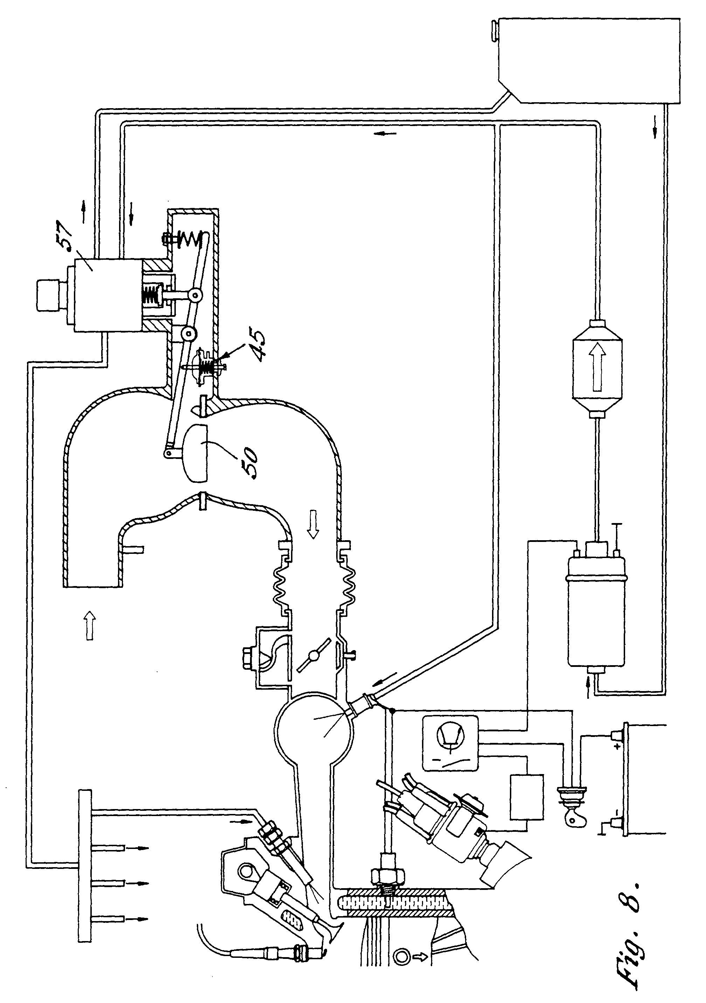

Figure 7 is a top plan view of a portion of Figure 6;
Figure 8 is a schematic representation of the third embodiment in use;
Figure 9 is a side elevational view in cross section of a fourth embodiment of apparatus for supplying an air-fuel mixture to an internal combustion engine;
Figure 10 is a sectional top plan view of a portion of Figure 9;
Figure 11 is a top plan view in cross section of an alternative moveable member for use in the apparatus of the fourth embodiment;
Figure 12 is a side elevational view of the moveable member of Figure 11;
Figure 13 is a side elevational view in cross section of a portion of a fifth embodiment of an apparatus for supplying an air fuel mixture to an internal combustion engine; and
Figure 14 is a schematic representation of the fifth embodiment in use.

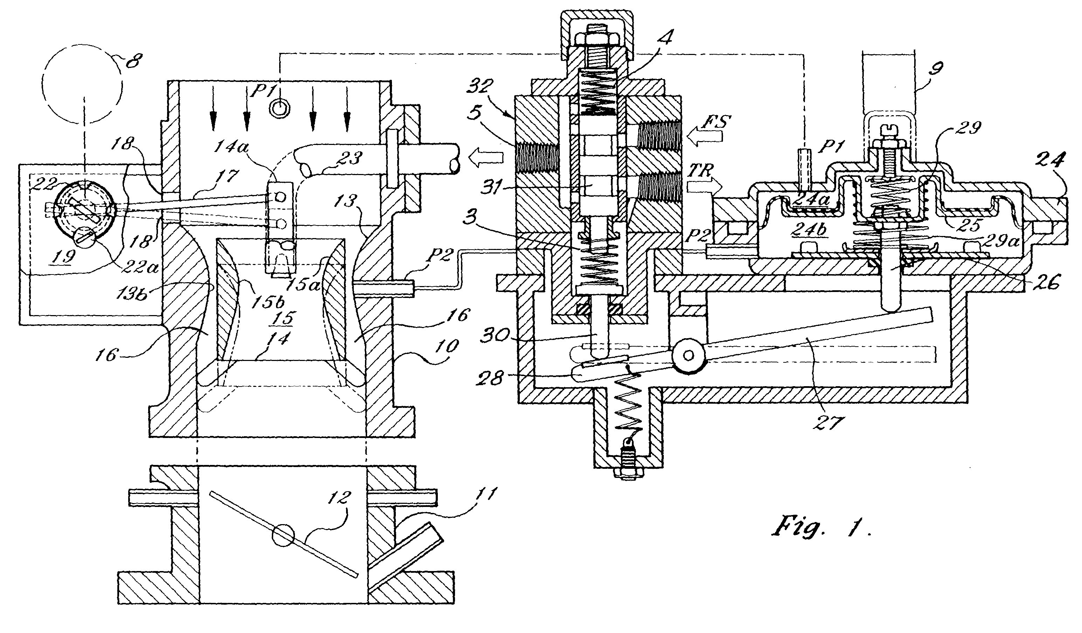

Referring to Figures 1 to 3, an apparatus for supplying an air fuel mixture to an internal combustion engine comprises an air metering device 1 and a fuel control means. The air metering device comprises a tubular casing 10 and a moveable member 14. The tubular casing 10 is arranged to receive intake air to the engine. The lower end of casing 10 is coupled to the intake manifold 11 of the internal combustion engine through a duct having a throttle 12 therein. The casing 10 includes a section 13 having an internal Venturi contour. The moveable member 14 is mounted coaxially within Venturi section 13 of casing 10 and has an outer surface which is a true cylinder and an interior passage which is a tubular Venturi passage 15. Said moveable member 14 is spaced from section 13 and defines an annular exterior Venturi passage 16 formed by the Venturi contour of section 13 of the tubular casing 10 in conjunction with the exterior surface of member 14. A converging inlet 15a of the passage and a converging inlet surface of the casing section 13 have a parabolic form and lead to respective constricted throat portions 15b and 13b. Moveable member 14 is provided with a handle 14a pivotally coupled to linkage means comprising a lever 17. The lever 17 extends through a slot 18 in the casing 10 into a bracket 19 mounted on the casing. An extension 17a of the lever 17 passes through a pivotal shaft 20 on which is mounted countervailing force means comprising a helical torsion spring 21 providing mechanical advantage to an aerodynamic force acting on the member 14 by the length of the lever 17 divided by the length of 17a which corresponds to the radius of the torsion spring 21. The moveable member 14 is held in an upstream starting position by the torsion spring 21 against the upstream end of slot 18 in casing 10, tension of the spring constituting a countervailing force to the aerodynamic force which countervailing force is adjustable by a rotatable locking cap 22 holding the fixed end of torsion spring 19 and secured by screw 22a.

At a location in casing 10 opposite the throat portion 15b within member 14 (member 14 is shown in Figure 1 in an upstream starting position), a tap P2 is provided from the annular exterior passage which in conjunction with a tap P1 from the casing upstream of casing section 13 allows the velocity air pressure differential P1-P2 to be derived from the prevailing intake air flow. The effective throat of the varying Venturi passage produces a differential air pressure proportional to the prevailing air flow. The air metering device provides a metering output in the form of a differential pressure signal to control fuel quantity in proportion thereto and the interior Venturi passage 15 of the moveable member is available and accessible for fuel injection into the intake air stream where optimum conditions prevail for blending the fuel into the air stream by a single fuel injector 23 as shown.

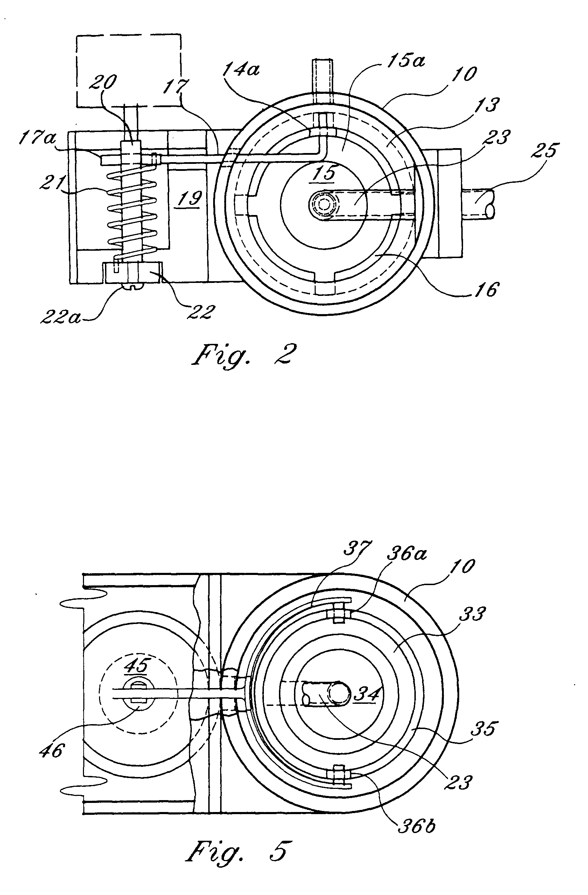

Figure 2 is the view looking into the casing 10. The flow path through the internal and external Venturi passages 15 and 16 is constant in all operable positions whereby being tortuous the cross-sectional area at the casing tap P2 increases with displacement thereby causing the air velocity pressure at tap P2 to be directly proportional to the volume of intake air flow by the linear increase in effective throat area with the corresponding increase of air volume.

A means to amplify and transform air pressure differential P1-P2 to a proportional force for application to a fuel flow control means comprises a means for generating a force equivalent to differential pressure P1-P2. The force generating means comprises a differential-pressure motor comprising a split casing 24 sealing a diaphgram-piston 25 between an upper chamber 24a connected to P1 and a lower chamber 24b connected to P2. The differential pressure P1-P2 acting on diaphragm piston 25 generates a force equal to P1-P2 multiplied by the area of said diaphragm-piston said force being proportional to the mass-volume of air flow through the air metering device 1.

A rod 26 attached to diaphragm piston 25 applies the said proportional force derived from the differential pressure P1-P2 to a linkage lever 27. The lever 27 is pivotally mounted and an end 28 thereof is arranged to bear on an axially displaceable member 30 connected with the valve member 31 of a fuel flow control means comprising a fuel regulating valve 32. The regulating valve 32 comprises a ported housing 2 for the valve member 31 which is axially displaceable according to amplified P1-P2 which is input as a control signal to the fuel control means. The control signal is countervailed by output fuel pressure acting oppositely thereto whereby the output pressure of the fuel to the injector 23 balances said amplified P1-P2 force at a value proportional to the mass volume of the intake air flow.

It will be appreciated that the control signal input to the fuel regulating valve is proportional to movement of the moveable member 14 which is determined by the aerodynamic force acting thereon and that this force is amplified by the differential pressure motor and the lever 27 for application to the valve. Accordingly, a relatively small aerodynamic force can be used to control relatively high fuel pressure.

Springs 3 and 4 disposed at opposite ends of the valve member bias the regulating valve to a minimum fuel pressure starting position.

Fuel is output from the fuel flow control means via a discharge port 5 of the housing 2 and is injected by the injector 23 into the intake air stream in optimum ratio thereto; said ratio being adjustable by the tension of the torsion spring 21 which increases or decreases P1-P2 for a given airflow and springs 29, 29a and 4 which increases or decreases fuel pressure. The fuel regulating valve 32 has respective ports connected to a constant pressure fuel supply FS and a tank return line TR which is connected to the fuel supply tank. Spring 29a is a balancing spring. The construction and operation of the fuel regulating valve 32 is the subject of US Patent No. 4,895,184 (EP0363448) of the present applicant.

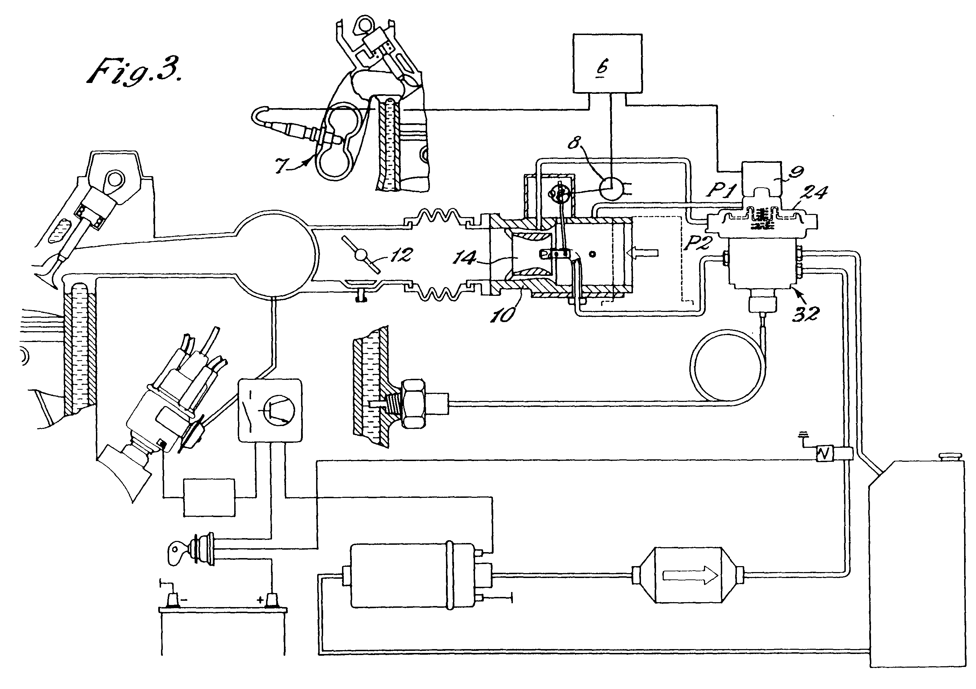

As shown in Figure 3, the apparatus further comprises processor means 6 coupled with an exhaust gas sensor means 7, a transducer 8 coupled with the shaft 20 on which the lever 17 pivots which transducer provides a signal according to displacement of the lever, and an electric motor 9. The motor 9 is controlled by the processor means 6 according to input from the transducer 8 and exhaust gas sensor 7 and acts upon the spring 29 to dynamically adjust the tension thereof for modulating the air-fuel ratio of the regulating valve.

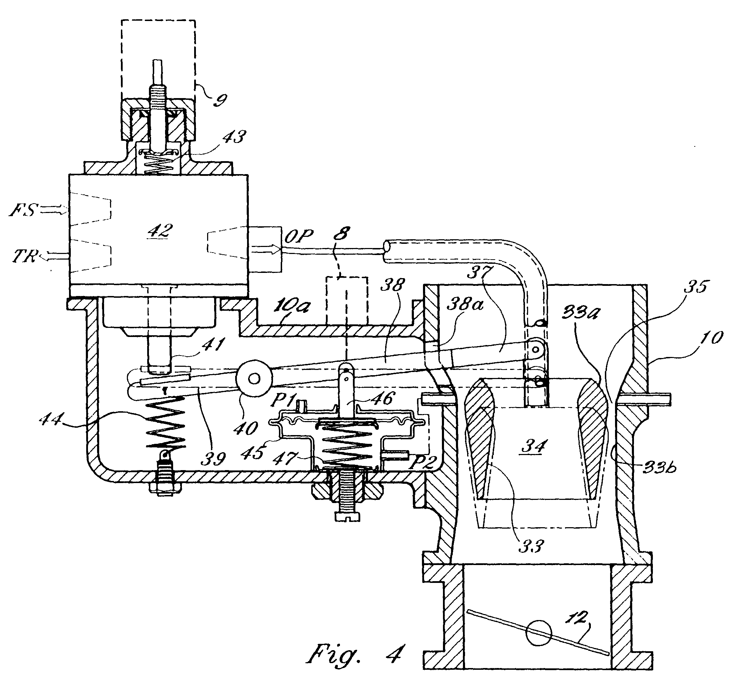

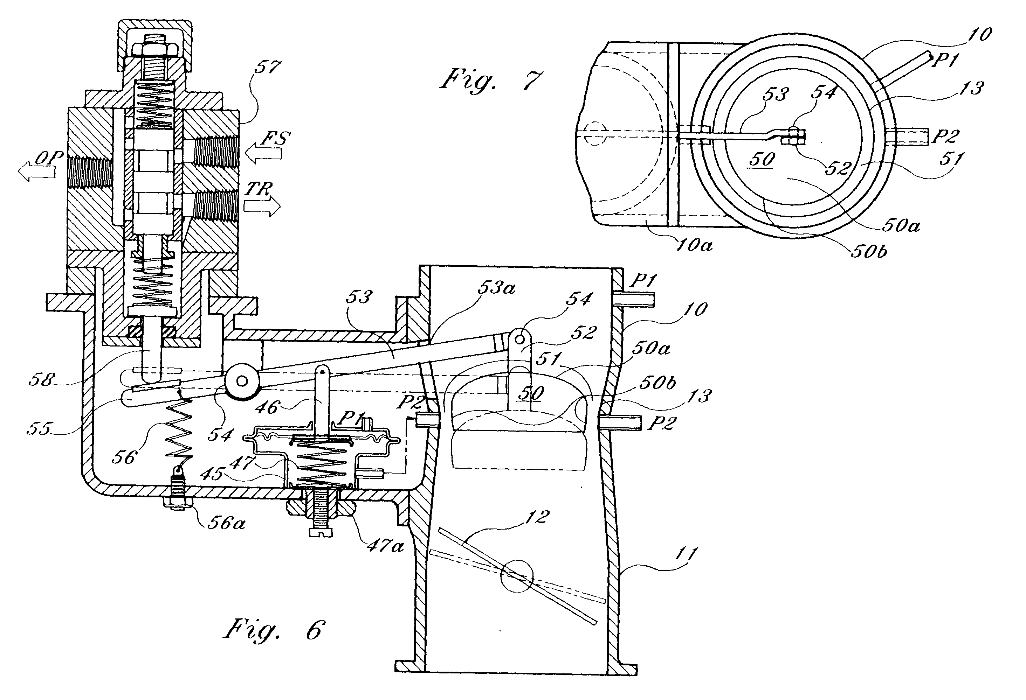

Referring to Figures 4 and 5, in a second embodiment of apparatus for supplying an air-fuel mixture to an internal combustion engine, the fuel flow control means is controlled by mechanical transmission of the aerodynamic displacement force on the moveable member and additionally modulated by differential air pressure force P1-P2 derived from varying Venturi passages retaining the advantage of an interior air passage 34 for direct fuel injection therein.

A cylindrical moveable member 33 includes a Venturi contoured outer surface 33a which in conjunction with an interior surface 33b of a tubular casing 10 forms an exterior Venturi passage 35. The member 33 is provided with two handles 36a and 36b diametrically attached to the upstream surface of said member to which a semi-circular yoke 37 is pivotally attached. The yoke 37 is rigidly attached at its centre point to linkage means comprising lever portion 38 which extends through a slot 38a in the casing 10. The lever portion 38 is pivotally mounted inside a casing extension 10a and supports the moveable member 33 for axial movement in the casing 10 within limits imposed by the slot 38a.

The linkage means further comprises a lever portion 39 which extends beyond pivot 40 by a distance less than the length of the lever portion 38. The greater length of the lever portion 38 and yoke 37 is a multiple of the length of the lever portion 39 thereby amplifying the aerodynamic force on the moveable member 33 by the mechanical advantage of the length of 38 plus the radius of yoke 37 divided by the length of portion 39 from pivot point 40 to the point at which the portion 39 bears against an actuating stem 41 of a fuel regulating valve 42 of a fuel control means.

Aerodynamic force of intake air flow through the tubular casing 10 enveloping moveable member 33 and flowing through passages 34 and 35 urges said member downstream which movement is input as a control signal to the regulating valve 42 to increase or decrease output fuel pressure OP. The aerodynamic force is countervailed by application of output fuel pressure OP to a valve member of the regulating valve together with an internal spring 53 or an external spring 44, or both.

A spring return diaphgram motor 45 is mounted in extension casing 10a and has an output stem 46 pivotally attached to lever portion 38 whereby the application of differential air pressure P1-P2 from the varying throat of passages 34 and 35 augments aerodynamic force on lever portion 38. The spring 47 in diaphragm motor 45 urges the lever portion 38 to its upstream position against end of slot 38a.

As with the first embodiment, the apparatus can be provided with an electric motor 9, a transducer 8 coupled with the linkage means which provides a signal according to displacement of the lever portion 38 and processor means (not shown) coupled to the transducer. The processor means can also be coupled with an exhaust gas sensor means (not shown). The motor 9 is controlled by the processor means according to output signals of the transducer 8 and exhaust gas sensor and acts upon the spring 43 of the fuel regulating valve 42 to adjust the spring tension for modulating the air-fuel ratio in operation of the apparatus.

An advantage of applying the differential pressure signal to the lever portion 38 is that in addition to amplifying the effect of aerodynamic force for input to the fuel regulating valve, the diaphragm motor 45 acts as a damper on the lever reducing oscillation of the lever on sudden changes of the throttle 12 position so that more accurate fuel injection can be obtained.

As with the first embodiment, output fuel from the fuel regulating valve 42 is injected into the intake air stream by an injector 23.

Figure 6 shows a third embodiment of the apparatus which comprises essentially the same improved mechanical-fluidic structure as the second embodiment but with an alternative moveable Venturi member.

This embodiment comprises a tubular intake casing 10 to be coupled to an intake manifold 11 of an engine through a duct having a throttle 12 therein. The tubular intake casing 10 comprises a section 13 whose interior surface is contoured to form a Venturi passage. A cylindrical moveable member 50 having a spherical streamlined upstream surface 50a leading to side surface 50b and coaxially mounted in section 13, forms an annular Venturi passage 51 in conjunction with the surface of section 13. The member 50 is mounted for pivotal, rather than axial, movement in response to airflow through the casing 10.

Said moveable member 50 has a handle 52 secured to the axial centre of upstream surface 50a to which a lever 53 of a linkage means connecting the moveable member with a countervailing force means is pivotally coupled. The lever 53 extends into a casing extension 10a where it is pivotally mounted on pin 54 inside of casing 10a and extends beyond said pivot with a short lever extension 55 thereby constituting a first class mechanical lever to increase the aerodynamic forces on moveable element 50 by the length of 53 divided by the length of 55.

The moveable member 50 is held in its starting upstream position wherein lever 53 bears against the upper end of slot 53a and this start position of member 50 is at the coincidence of the widest diameter of movable member 50, occurring at the junction of the side surface 50b with top spherical surface 50a and the throat of casing section 13. This position defines the minimum throat area of the annular Venturi passage 51. This is the position for a tap P2 in casing 10 from which, in conjunction with a tap P1 disposed upstream thereof, a differential air-velocity pressure (P2-P1) is derived.

A fuel flow control means comprises a fuel pressure regulating valve 57 actuated by displacement of its controlling component 59 which is mounted such that an exterior rod 58 of the controlling component bears against lever extension 55.

Aerodynamic force of airflow through the casing 10 impinging upon, enveloping member 50 and flowing through Venturi passage 56 urges said member downstream which movement is transmitted to the regulating valve 57 by rod 58. The displacement of the controlling component to increase or decrease fuel pressure output OP from the regulating valve is countervailed by countervailing force means internal springs or output fuel pressure depending upon the particular valve. A biasing spring 56 adjustable by locking eye bolt 56a is applicable when the other means are unavailable.

As in the second embodiment a spring return diaphragm motor 45 is mounted in casing extension 10a and the output stem 46 is pivotally attached to the lever 53 whereby spring 47 in diaphragm motor 45 urges lever 53 to is upstream position against end of slot 53a and is adjustable by lockable screw 47a. It will be appreciated that the spring 47 constitutes another countervailing force means against downstream movement of the moveable member.

The application of differential air pressure P1-P2 from the effective throat tap P2 form the passage 51 augments aerodynamic force on lever bar 53 against countervailing force of spring 47 and biasing spring 56.

The regulated fuel pressure OP output by this embodiment can be connected to fuel injectors into individual engine intake valve ports (ported injection) or cylinders, or alternatively to a single injector into the intake manifold. An example of a ported injection application is shown in Figure 8.

It will be understood that air-fuel ratio modulation by means of an exhaust gas sensor means, displacement transducer, processor means and electric motor, as described in connection with the previous embodiments, can also be applied to this embodiment.

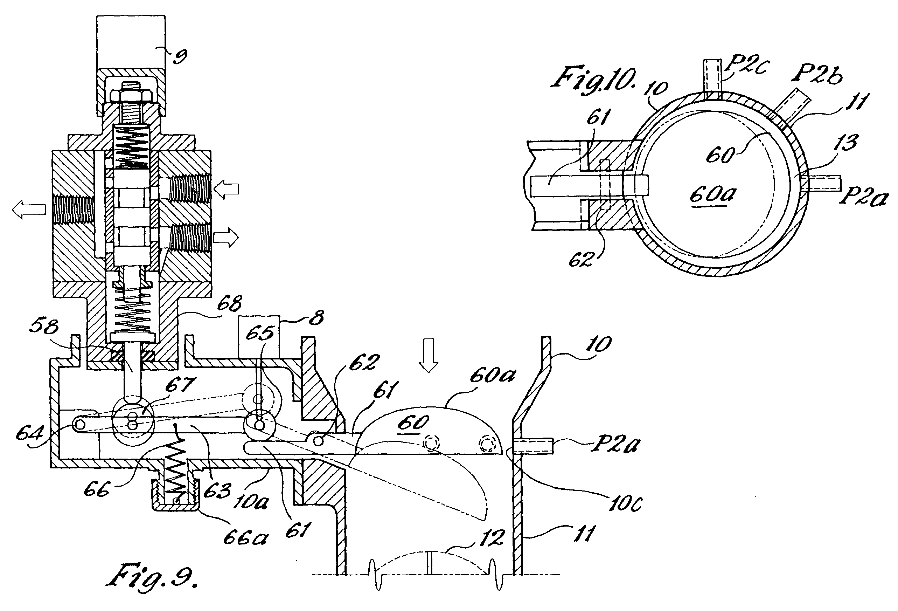

Figures 9 and 10 show a fourth embodiment of apparatus for supplying an air-fuel mixture to an internal combustion engine. A moveable member 60 is generally circular in shape. The member 60 has a spherically contoured upstream surface 60a and is pivotally mounted in a tubular casing 10. The arrangement is such that the member 60 will swing with increasing air flow to the intake casing 11 as controlled by a throttle 12. The peripheral shape of the moveable member 60 is approximately parabolic and forms a Venturi passage 13 with a cylindrical section 10c of the casing.

The Venturi passage at minimum airflow is circular and as increased airflow swings moveable member 60 in a generally downstream direction the Venturi passage enlarges in the form of a crescent.

A linkage means comprising levers 61 and 63 is provided for connecting the member 60 with countervailing force means comprising a spring 66. The lever 61 extends from the member 60 into casing extension 10a and pivots on a pin 62. The moveable member is held in an upstream start position by spring 66 which is connected therewith by the lever 63 pivoting on a pin 64 with roller 65 bearing on the lever 61. The biasing force of the spring 66 is adjustable by means of a screw cap 66a.

The lever 63 is provided with a free roller 67 located a short distance from pin 64 thereby providing a second class lever for application to a fuel control means comprising a fuel regulating valve 68. The linkage means serves to amplify the aerodynamic force acting on the moveable member 60 relative to the countervailing force of the regulating valve and biasing spring 66.

A pressure tap P2 is provided at the throat section of the Venturi passage and is used with an upstream pressure tap (not shown) to derive a differential air pressure P1-P2 which can be applied to the regulating valve either by a spring return diaphgram motor 45 as shown in conjunction with the second and third embodiments acting on the lever 61 or 63, or by a pressure differential motor as shown in conjunction with the first embodiment.

In Figure 10, alternative positions for the tap P2 are indicated at P2a, P2b and P2c. As previously described, as the moveable member pivots in the downstream direction, the Venturi passage enlarges to include a crescent shaped section. The radial position of the tap P2 will together with the displacement of the member determine the effective throat of the Venturi passage and thus by selecting a suitable tap P2 position, the air differential pressure signal can be optimized according to the size of the engine to which the apparatus is fitted.

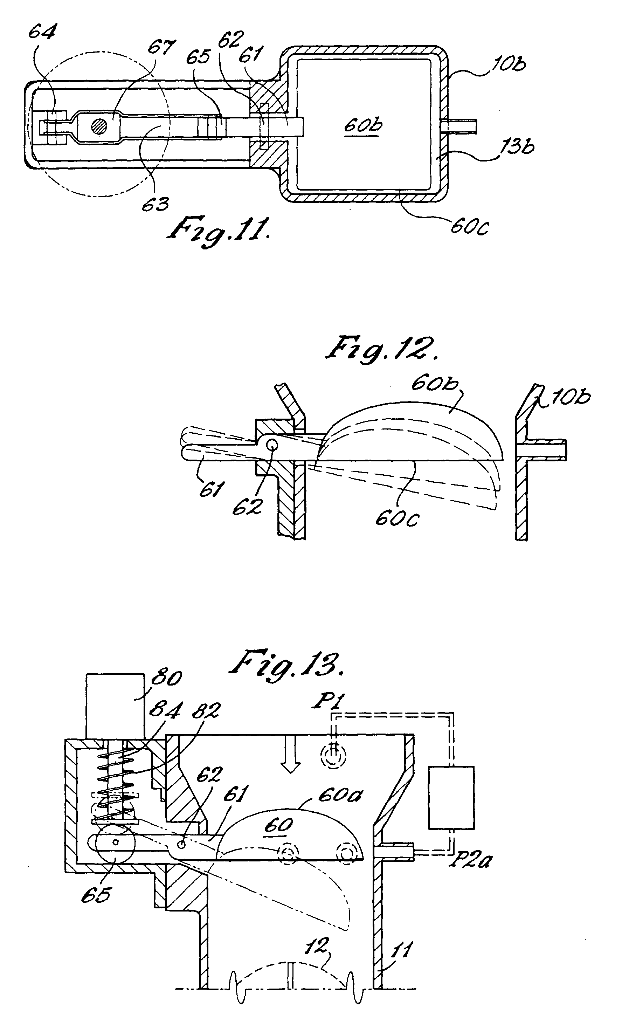

Figures 11 and 12, show an alternative moveable member and casing for the fourth embodiment. The member 60b and casing 10b have a generally rectangular shape whereby the Venturi passage section is generally rectangular. The member 60b is mounted for pivotal movement in response to air flow through the casing and has an upstream facing surface and sides 60c which are circular and parabolic and providing a four sided equal space at its starting position (as seen in Figure 10)

Airflow generated force on this member 60b causes the member to swing and whilst the Venturi passage on three sides remains substantially the same, the side opposite pivot arm 61 presents an increasing Venturi passage 13a in conjunction with casing 10b.

As with the previously described embodiments, a position transducer 8 and exhaust gas sensor (not shown) may be used together with an electric motor 9 and a process or means to provide dynamic modulation of the air-fuel ratio of the regulating valve can be applied to this embodiment if desired.

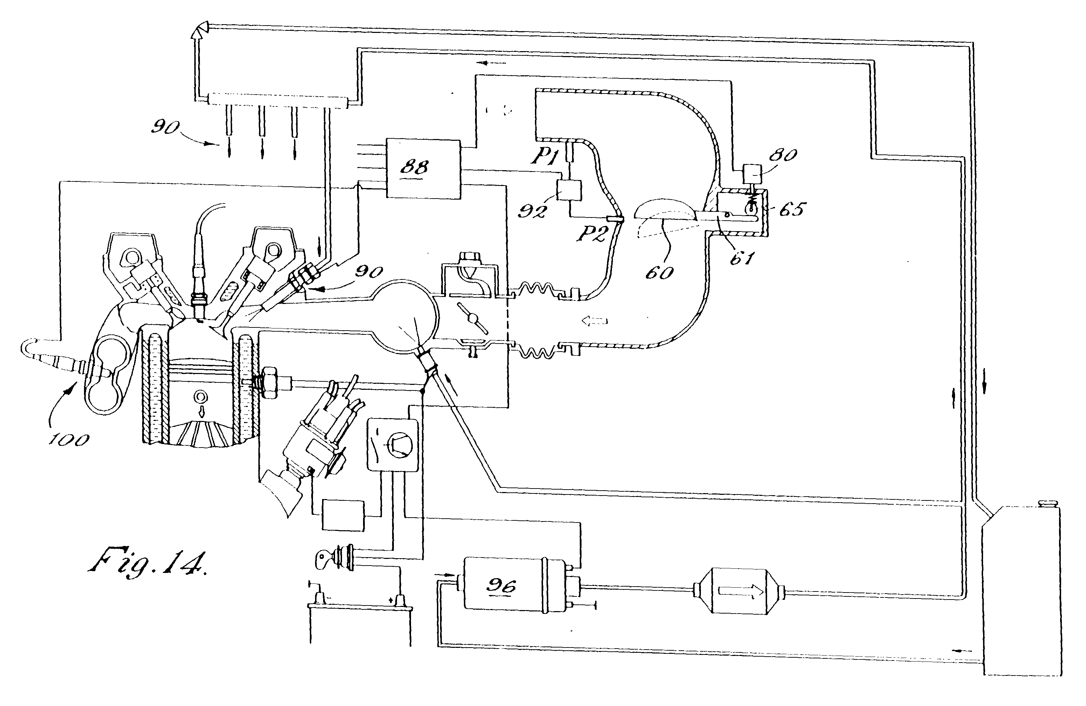

A fifth embodiment of an apparatus for supplying an air-fuel mixture to an internal combustion engine is shown in Figures 13 and 14. In this embodiment the moveable member 60 and arrangement of pressure taps P2 corresponds to the arrangement shown in Figures 8 and 9 and accordingly like reference numerals are used to describe like parts.

The lever arm 61 is pivotal about a pin 62 and has a free end region which bears against a countervailing force means comprising a spring 82. The spring 82 biases the moveable member to an upstream starting position as shown in Figure 12. The moveable member is pivotally displaced in a downstream direction, as indicated in the Figure, by intake air flowing to the engine. The aerodynamic force on the moveable member is amplified by the lever 61 relative to the spring 82 and the amplified force is sensed by a transducer 80 of a fuel control means as a displacement of the lever 61 which has a roller 65 bearing against a plunger 84 of the transducer. The transducer provides an electrical output signal proportional to the amplified force which is input to a processor means 88 and fuel injector means 90 of the fuel control means.

A pressure transducer 92 is provided to transduce a differential pressure signal derived from a pressure tap P2 at the throat section of the Venturi passage defined by the moveable member and the casing 10 and an upstream pressure tap P1. As with the fourth embodiment a range of pressure tap P2 positions are indicated at P2a, P2b and P2c. The transducer 92 provides an electrical output signal proportional to the differential pressure signal P1- P2 which is input to the processor means 88. The processor means 88 opens and closes the respective injectors of the injector means 90 to deliver fuel from pump means 96, which constitutes a constant pressure fuel supply, in the optimum ratio of air-fuel according to the air metering device amplified output signals generated by movement of the moveable member 60 in response to the aerodynamic force on the member.

An exhaust gas sensor means 100 can additionally be coupled to the processor means 88 for modulating the air fuel ratio according to operating conditions.

It will be appreciated that the described embodiments provide improved metering systems of internal combustion engines with structures comprising streamlined shaped members movably supported in tubular casings forming Venturi-like passages around and through said member the passage of air which exerts aerodynamic force on the shaped member displacing said member downstream against a countervailing force, thereby producing mechanical and fluidic outputs that are proportional to mass-volume of air flow and applicable to fuel control devices and systems in naturally aspirated and supercharged air supply systems.

The moveable member of some of the embodiments provides an interior passage for direct injection of fuel into the air stream in its optimum high velocity minimum pressure condition for maximum dispersion and homogenization of the fuel with the air stream.

The embodiments provide apparatus which improve compensation for inertia of the system which delays the change of positional movement response to the sudden increasing of air flow by throttle manipulation for acceleration or sudden decrease of air flow upon deceleration, prevent surge and oscillation and provide the means for momentary enrichment and leaning of the optimum fuel-air ratio to yield smooth bumpless performance during transitions.

In summary, embodiments of the apparatus improve the range, performance and applicability of metering structures comprising streamline shaped moveable bodies in Venturi-like passages impinged and encompassed by the metered air flow in a tubular casing by linking the moveable member with a system of levers to the countervailing force with mechanical advantage to the moveable member whereby the aerodynamic force is amplified and/or by amplifying Venturi differential pressure-motor means applied to said system of levers. Accordingly the proportional outputs of the air metering device are extended into the low end range for application to fueling the modern high speed high output engine.

In the embodiments, the metering outputs are provided with feedback means to offset inertia and transitional effects on fuel air ratio and throttle manipulation to provide the optimum performance and efficiency in all speed load conditions and modes of operation.

In the described use of the embodiments, a fluid-mechanical variable Venturi metering system having a contoured moveable element in an intake casing to an internal combustion engine whose shape and Venturi air passage(s) results in automatic shifting of the moveable element by aerodynamic force as a function of the mass-volume of the air passing through which with levers produces amplified outputs of displacement, countervailing force and differential air velocity pressure (Venturi vacuum) proportional thereto and compensating for temperature, moisture content and pressure provides an output or combination of outputs or transducing of outputs applied to fuel control devices and systems to provide air-fuel mixtures in optimum ratio for the entire speed-load range of the modern engine for naturally aspirated and supercharged Fuel Injection and Carburetted Injection systems.

The instant invention has been shown and described herein in what is considered to be the most practical and preferred embodiments. It is recognised, however, that departures may be made therefrom within the scope of the invention which is defined by the claims and that obvious modifications will occur to a person skilled in the art.

## Claims

1. Apparatus for supplying an air-fuel mixture to an internal combustion engine, said apparatus comprising:
(a) a tubular casing (10) to be connected to an internal combustion engine to receive intake air to the engine;
(b) a moveable member (14) coaxially mounted within said tubular casing (10) and supported and spaced therein for downstream movement, said moveable member (14) having streamlined upstream surfaces and contours which in conjunction with the interior surface contours of said casing (10) define an annular parabolic Venturi passage (16) in the space between said moveable member (14) and said tubular casing (10), which passage is variable according to movement of said member (14), whereby the intake air stream admitted into the casing (10) encompasses said member (14) and flows through the said passage (16) exerting aerodynamic force on said moveable member (14) moving said member (14) in the downstream direction;
(c) means (21; 43, 44; 56; 66; 82) connected with said moveable member (14) for providing countervailing force against downstream movement of said moveable member (14); and **characterised by**
(d) means to amplify the aerodynamic force on said moveable member, said amplifying means comprising a linkage means (17; 38; 53; 61, 63) connected with said moveable member (14) and said countervailing force means (21; 43, 44; 56; 66; 82) providing a mechanical advantage greater than 1:1 between said moveable member (14) and said countervailing force means (21; 43, 44; 56; 66; 82) and
(e) fuel flow control means connected to said linkage means (17; 38; 53; 61, 63), whereby a light aerodynamic force on said moveable member (14) by said intake air stream is amplified and input to said fuel flow control means as a control signal thereby providing a proper amount of fuel relative to an optimum ratio of air-fuel mixture linearly.

2. Apparatus as claimed in claim 1, comprising means for generating a force equivalent to a differential air pressure signal obtained from a pressure tap (P2) at a throat section of the variable Venturi passage and a pressure tap (P1) upstream thereof, said air pressure signal being input to said fuel flow control means as a control signal thereby providing a proper amount of fuel relative to an optimum ratio of air-fuel mixture linearly.

3. Apparatus as claimed in claim 1 or 2, wherein said countervailing force means comprises spring means.

4. Apparatus as claimed in any preceding claim, wherein said fuel flow control means provides countervailing force to said moveable member (14) derived by feedback of discharge fuel pressure to said fuel flow control means.

5. Apparatus as claimed in any preceding claim , installed in an engine air induction system and applied to fuel quantity control from an engine driven or electric pump wherein said fuel flow control means is responsive to an output thereof and controls fuel pressure to atomizing injectors in intake air passages thereby providing optimum fuel-to-air ratio in a continuous multi-port fuel injection system for an internal combustion engine.

6. Apparatus as claimed in claim 1, 2, 3 or 4, wherein said fuel flow control means comprises a single injector discharging into an interior passage of the moveable member (14).

7. Apparatus as set forth in claim 1, 2 or 3, wherein said fuel flow control means comprises injector means (90) to be connected with fuel pump means, processor means (88) for controlling said injector means and a transducer (80) coupled with said linkage means (61, 63) and said processor means for providing an electrical signal to said processor means proportional to displacement of said moveable member (14).

8. Apparatus as claimed in any one of claims 1 to 6, further comprising processor means coupled with exhaust gas sensor means (100), a transducer actuated by said linkage means, and an electric motor, said motor being controlled by said processor means according to signals from said exhaust gas sensor means and said transducer for modulating air-fuel ratio of said apparatus.

9. Apparatus as claimed in any one of the preceding claims, wherein said moveable member (14) is pivotally supported in said tubular casing (10) for pivotal movement in response to airflow through the tubular casing (10).

10. Apparatus as claimed in any one of the preceding claims, wherein said moveable member(14) is a cylindrical body with an interior central parabolic contour Venturi flow passage and has a cylindrical exterior surface which in conjunction with the interior surface of said tubular casing (10) defines said annular parabolic Venturi passage whereby the intake air admitted into the tubular section (10) of casing encompasses said moveable member (14) and is divided and flows through the interior and annular passages exerting aerodynamic force on said moveable member (14) moving said member in the downstream direction and said Venturi passages, being variable with reference to said differential air pressure from taps (P1, P2) providing an air metering differential air pressure signal proportional to mass-volume of the intake air stream.

11. Apparatus as claimed in any one of the preceding claims, wherein said moveable member (14) is pivotally supported external to the tubular casing (10) for pivotal movement.

12. Apparatus as claimed in any one of the preceding claims, said apparatus further comprising diaphragm means (45) connected with said linkage means (38; 53) for applying to said linkage means (38; 53) a force which is variable according to said pressure differential signal.

13. Apparatus as claimed in any one of claims 1, 2, 3 or 4, installed in an engine air induction system and applied to fuel pressure control from an engine driven or electric pump wherein said fuel pressure control means is responsive to an output thereof and controls fuel pressure to injectors at each cylinder intake passage wherein said injectors are sequentially opened and closed by means synchronized with each cylinder intake stroke thereby providing optimum fuel-to-air ratio in synchronized fuel injection system for an internal combustion engine.

14. Apparatus as claimed in any one of claims 1, 2, 3 or 4, installed in an engine air induction system and applied to fuel pressure control from an engine driven or electric pump wherein said fuel pressure control means is responsive to an output thereof and controls fuel pressure to injectors in each cylinder or in combustion chamber thereof wherein said injectors are sequentially opened and closed by means synchronized with cylinder compression stroke thereby providing optimum fuel-to-air ratio in compression-ignition (Diesel) internal combustion engines.

15. Apparatus as claimed in claim 13 or claim 14, wherein said injectors are electric valved atomizing injectors.

## Patentansprüche

1. Vorrichtung zur Zufuhr von einem Kraftstoff-Luftgemisch zu einem Verbrennungsmotor, die Vorrichtung umfassend:
(a) eine röhrenförmige Hülle (10) zur Verbindung mit einem Verbrennungsmotor, um Ansaugluft zum Motor aufzunehmen;
(b) ein bewegliches Teil (14), das coaxial innerhalb der röhrenförmigen Hülle (10) montiert ist, und das darin für eine Bewegung stromabwärts gestützt und angeordnet ist, wobei das bewegliche Teil (14) stromlinienförmige stromaufwärts gerichtete Oberflächen und Konturen aufweist, welche zusammen mit den Konturen der Innenfläche des beweglichen Teiles (14) innerhalb des Raumes zwischen dem beweglichen Teil (14) und der röhrenförmigen Hülle (10) einen ringförmigen parabolischen Venturi-Durchlauf (16) definieren, und der Durchlauf gemäß der Bewegung des Teiles (14) variabel ist, wodurch der Ansaugluftstrom, der in die Hülle gelassen wird, das Teil (14) umgibt, durch den Durchlauf (16) strömt und dabei eine aerodynamische Kraft auf des bewegliche Teil (14) ausübt und das Teil (14) in eine Richtung stromabwärts bewegt;
(c) ein Mittel (21; 43, 44; 56; 66; 82), das mit dem beweglichen Teil (14) verbunden ist zur Erzeugung einer Gegenkraft gegen eine Stromabwärtsbewegung des beweglichen Teiles (14); und **gekennzeichnet durch**
(d) ein Mittel zur Verstärkung der auf den beweglichen Teil wirkenden aerodynamischen Kraft, wobei das Verstärkungsmittel ein Verbindungsmittel (17; 38; 53; 61; 63) aufweist, das mit dem beweglichen Teil (14) verbunden ist, und das Gegenkraftmittel (21; 43, 44; 56; 66; 82) eine mechanischen Vorteil von mehr als 1:1 zwischen dem beweglichen Teil (14) und dem Gegenkraftmittel (21; 43, 44; 56; 66; 82) erzeugt; und
(e) ein Kraftstoffflusssteuermittel, das mit dem Verbindungsmittel (17; 38; 53; 61; 63) verbunden ist, wodurch eine leichte auf das bewegliche Teil (14) wirkende aerodynamische Kraft **durch** den Ansaugluftstrom verstärkt und dem Kraftstoffflusssteuermittel als ein Steuersignal zugeführt wird, wodurch eine korrekte Menge Kraftstoff linear relativ zu einem optimalen Verhältnis von Kraftstoff-Luftgemisch bereitgestellt wird.

2. Vorrichtung wie in Anspruch 1 beansprucht, umfassend:
Mittel zur Erzeugung einer Kraft, die äquivalent zu einem Differentialluftdrucksignal ist, das von einem Druckhahn (P2) an einem Halsstück des variablen Venturi-Durchlaufes und einem stromaufwärts davon gelegenen Druckhahn (P1) erhalten wird, wobei das Luftdrucksignal dem Kraftstoffflusssteuermittel als ein Steuersignal zugeführt wird, wodurch eine korrekte Menge Kraftstoff linear relativ zu einem optimalen Verhältnis von Kraftstoff-Luftgemisch bereitgestellt wird.

3. Vorrichtung wie in Anspruch 1 oder 2 beansprucht, wobei das Gegenkraftmittel Federmittel umfasst.

4. Vorrichtung wie in einem der vorhergehenden Ansprüche beansprucht, wobei das Kraftstoffflusssteuermittel eine Gegenkraft zu dem beweglichen Teil (14) erzeugt, die durch Rückwirkung des Druckes von austretendem Kraftstoff auf das Kraftsstoffflusssteuermittel abgeleitet wird.

5. Vorrichtung wie in einem der vorhergehenden Ansprüche beansprucht, installiert in einem Motorluftansaugsystem und angewandt auf eine Steuerung der Kraftstoffmenge von einem angetriebenen Motors oder einer elektrischen Pumpe, wobei das Kraftstoffflusssteuermittel auf eine Abgabe dieser reagiert und den Druck von Kraftstoff für eine Zerstäubungseinspritzung in einem Ansaugluftdurchlauf steuert, wodurch ein optimales Verhältnis von Kraftstoff zu Luft in einem fortlaufenden Mehrfachanschluss-Einspritzsystem für einen Verbrennungsmotor hergestellt wird.

6. Vorrichtung wie in Anspruch 1, 2 oder 4 beansprucht, wobei das Kraftstoffflusssteuermittel ein einzelnes Einspritzventil umfasst, der in einen innere Durchlauf des beweglichen Teiles (14) freisetzt.

7. Vorrichtung wie in Anspruch 1, 2 oder 3 beansprucht, wobei das Kraftstoffflusssteuermittel ein Einspritzmittel (90) umfasst, zur Verbindung mit einem Kraftstoffpumpenmittel, und ein Prozessormittel (88) zur Steuerung des Einspritzmittels, und einen mit dem Verbindungsmittel (61, 63) und dem Prozessormittel gekoppelten Signalgeber (80) zur Erzeugung eines elektrischen Signals für das Prozessormittel, welches proportional zur Verschiebung des beweglichen Teiles (14) ist.

8. Vorrichtung wie in einem der Ansprüche 1 bis 6 beansprucht, mit einem Prozessormittel, das mit einem Auspuffgassensormittel (100) gekoppelt ist, einem Signalgeber, der durch das Verbindungsmittel betätigt wird, und einem elektrischen Motor, welcher durch das Prozessormittel gemäß Signalen von dem Auspuffgassensormittel und dem Signalgeber gesteuert wird, zur Modulation des Kraftstoff-Luftgemisches der Vorrichtung.

9. Vorrichtung wie in einem der vorhergehenden Ansprüche, wobei das bewegliche Teil (14) drehbar in der röhrenförmigen Hülle (10) gestützt ist, für eine Drehbewegung als Reaktion auf einen Luftstrom durch die röhrenförmige Hülle (10).

10. Vorrichtung wie in einem der vorhergehenden Ansprüche beansprucht, wobei das bewegliche Teil (14) ein zylindrischer Körper ist mit einem Venturi-Durchlauf mit einer inneren zentralen parabolischen Kontur, und mit einer zylindrischen Außenfläche, die zusammen mit der Innenfläche der röhrenförmigen Hülle den ringförmigen parabolischen Venturi-Durchlauf definiert, wodurch die in den röhrenförmigen Abschnitt (10) der Hülle gelassene Ansaugluft das bewegliche Teil (14) umgibt, geteilt wird, durch das Innere und die ringförmigen Durchläufe strömt und eine aerodynamische Kraft auf das bewegliche Teil (14) ausübt, das Teil in der Richtung stromabwärts bewegt wird, den Venturi-Durchlauf bezüglich des Differentialluftdrucks von den Hähnen (P1, P2) variabel ist, und ein luftmessendes Differentialluftdrucksignal erzeugt wird, das proportional zum Massenvolumen des Ansaugluftstromes ist.

11. Vorrichtung wie in einem der vorhergehenden Ansprüche beansprucht, wobei das bewegliche Teil (14) zur Drehbewegung außerhalb der röhrenförmigen Hülle drehbar gestützt ist.

12. Vorrichtung wie in einem der vorhergehenden Ansprüche beansprucht, wobei die Vorrichtung ferner ein Blendenmittel (45) aufweist, das mit dem Verbindungsmittel (38; 53) verbunden ist, zur Ausübung einer Kraft auf das Verbindungsmittel (38; 53), die gemäß dem Druckdifferentialsignal variabel ist.

13. Vorrichtung wie in einem der Ansprüche 1, 2, 3 oder 4 beansprucht, in einem Motorluftansaugsystem installiert und angewandt auf eine Steuerung des Kraftstoffdruckes von einem angetriebenen Motor oder einer elektrischen Pumpe, wobei die Kraftstoffdrucksteuermittel auf eine Abgabe dieser reagiert, und den Druck von Kraftstoff für Einspritzventile an jedem Zylinderansaugdurchlauf steuert, wobei die Einspritzventile durch Mittel, die mit jedem Zylinderansaugschlag synchronisiert sind, sequentiell geöffnet und geschlossen werden, wodurch ein optimales Kraftstoff-Luftverhältnis in einem synchronisierten Kraftstoffeinspritzsystem für einen Verbrennungsmotor geschaffen wird.

14. Vorrichtung wie in einem der Ansprüche 1, 2, 3 oder 4 beansprucht, in einem Motorluftansaugsystem installiert und angewandt auf eine Steuerung des Kraftstoffdruckes von einem angetriebenen Motor oder einer elektrischen Pumpe, wobei die Kraftstoffdrucksteuermittel auf eine Abgabe dieser reagiert, und den Druck von Kraftstoff für Einspritzventile in jedem Zylinder oder in einer Brennkammer desselben steuert, wobei die Einspritzventile durch Mittel, die mit jedem Zylinderkompressionsschlag synchronisiert sind sequentiell geöffnet und geschlossen, wodurch ein optimales Kraftstoff-Luftverhältnis in Kompressionszündungsverbrennungsmotoren geschaffen wird.

15. Vorrichtung wie in Anspruch 13 oder Anspruch 14 beansprucht, wobei die Einspritzventile elektrische ventilierte Zerstäubereinspritzventile sind.

## Revendications

1. Dispositif pour délivrer un mélange air/carburant à un moteur à combustion interne, ledit dispositif comprenant:
(a) une enveloppe tubulaire (10) prévue pour être reliée à un moteur à combustion interne afin de recevoir de l'air d'admission destiné au moteur;
(b) un organe mobile (14) monté coaxialement à l'intérieur de ladite enveloppe tubulaire (10) et supporté dans l'enveloppe en étant espacé de celle-ci en vue d'un déplacement vers l'aval, ledit organe mobile (14) présentant des surfaces amont profilées de manière aérodynamique et des contours qui, conjointement avec les contours de surface intérieure de ladite enveloppe (10), définissent un passage Venturi parabolique annulaire (16) dans l'espace prévu entre ledit organe mobile (14) et ladite enveloppe tubulaire (10), passage qui est variable en fonction du déplacement dudit organe (14), pour qu'ainsi le courant d'air d'admission admis dans l'enveloppe (10) entoure ledit organe (14) et circule à travers ledit passage (16) en exerçant sur ledit organe mobile (14) une force aérodynamique qui déplace ledit organe (14) dans la direction aval;
(c) des moyens (21; 43, 44; 56; 66; 82) reliés audit organe mobile (14) pour fournir une force compensatoire à l'encontre du déplacement vers l'aval dudit organe mobile (14); et **caractérisé par**
(d) des moyens destinés à amplifier la force aérodynamique exercée sur ledit organe mobile, lesdits moyens amplificateurs comprenant des moyens de liaison (17; 38; 53; 61, 63) reliés audit organe mobile (14), et lesdits moyens de fourniture de force compensatoire (21; 43, 44; 56; 66; 82) assurant une amplification de force mécanique supérieure à 1:1 entre ledit organe mobile (14) et lesdits moyens de fourniture de force compensatoire (21; 43, 44; 56; 66; 82); et
(e) des moyens de réglage d'écoulement de carburant reliés auxdits moyens de liaison (17; 38; 53; 61, 63), moyennant quoi une faible force aérodynamique exercée sur ledit organe mobile (14) par ledit courant d'air d'admission est amplifiée et délivrée en entrée auxdits moyens de réglage d'écoulement de carburant comme signal de commande, afin de fournir ainsi une quantité appropriée de carburant en fonction d'un rapport optimal de mélange air/carburant de manière linéaire.

2. Dispositif tel que défini dans la revendication 1, comprenant des moyens destinés à générer une force équivalente à un signal de pression d'air différentielle obtenu à partir d'une prise de pression (P2) située au niveau d'une section d'étranglement du passage Venturi variable et d'une prise de pression (P1) située en amont de celle-ci, ledit signal de pression d'air étant délivré en entrée auxdits moyens de réglage d'écoulement de carburant comme signal de commande, afin de fournir ainsi une quantité appropriée de carburant en fonction d'un rapport optimal de mélange air/carburant de manière linéaire.

3. Dispositif tel que défini dans la revendication 1 ou 2, dans lequel lesdits moyens de fourniture de force compensatoire comprennent des moyens élastiques.

4. Dispositif tel que défini dans l'une quelconque des revendications précédentes, dans lequel lesdits moyens de réglage d'écoulement de carburant fournissent audit organe mobile (14) une force compensatoire obtenue par application en retour d'une pression de décharge de carburant auxdits moyens de réglage d'écoulement de carburant.

5. Dispositif tel que défini dans l'une quelconque des revendications précédentes, installé dans un système d'induction d'air de moteur et appliqué à un réglage de quantité de carburant à partir d'une pompe entraînée par moteur ou électrique, dans lequel lesdits moyens de réglage d'écoulement de carburant sont sensibles à une sortie de celle-ci et règlent une pression du carburant en direction d'injecteurs pulvérisateurs situés dans des passages d'air d'admission, pour ainsi assurer un rapport carburant sur air optimal dans un système d'injection en continu de carburant à orifices multiples pour un moteur à combustion interne.

6. Dispositif tel que défini dans la revendication 1, 2, 3 ou 4, dans lequel lesdits moyens de réglage d'écoulement de carburant comprennent un seul injecteur débouchant dans un passage intérieur de l'organe mobile (14).

7. Dispositif tel que défini dans la revendication 1, 2 ou 3, dans lequel lesdits moyens de réglage d'écoulement de carburant comprennent des moyens injecteurs (90) destinés à être reliés à des moyens formant pompe à carburant, des moyens de traitement (88) destinés à commander lesdits moyens injecteurs, et un transducteur (80) relié auxdits moyens de liaison (61, 63) et auxdits moyens de traitement pour fournir auxdits moyens de traitement un signal électrique proportionnel au déplacement dudit organe mobile (14).

8. Dispositif tel que défini dans l'une quelconque des revendications 1 à 6, comprenant également des moyens de traitement reliés à des moyens détecteurs de gaz d'échappement (100), un transducteur activé par lesdits moyens de liaison, et un moteur électrique, ledit moteur électrique étant commandé par lesdits moyens de traitement en fonction de signaux provenant desdits moyens détecteurs de gaz d'échappement et dudit transducteur pour moduler un rapport air/carburant dudit dispositif.

9. Dispositif tel que défini dans l'une quelconque des revendications précédentes, dans lequel ledit organe mobile (14) est supporté de manière pivotante dans ladite enveloppe tubulaire (10) en vue d'un mouvement de pivotement en réponse à un courant d'air à travers l'enveloppe tubulaire (10).

10. Dispositif tel que défini dans l'une quelconque des revendications précédentes, dans lequel ledit organe mobile (14) est un corps cylindrique pourvu d'un passage d'écoulement Venturi central intérieur à contour parabolique, et présente une surface extérieure cylindrique qui, conjointement avec la surface intérieure de ladite enveloppe tubulaire (10), définit ledit passage Venturi parabolique annulaire, pour qu'ainsi l'air d'admission admis dans la section tubulaire (10) de l'enveloppe entoure ledit organe mobile (14), soit divisé et circule à travers les passages intérieur et annulaire en exerçant sur ledit organe mobile (14) une force aérodynamique qui déplace ledit organe dans la direction aval, et lesdits passages Venturi étant variables en fonction de ladite pression d'air différentielle provenant des prises (P1, P2) qui fournissent un signal de pression d'air différentielle de mesure d'air proportionnel au volume massique du courant d'air d'admission.

11. Dispositif tel que défini dans l'une quelconque des revendications précédentes, dans lequel ledit organe mobile (14) est supporté de manière pivotante à l'extérieur de l'enveloppe tubulaire (10) en vue d'un mouvement de pivotement.

12. Dispositif tel que défini dans l'une quelconque des revendications précédentes, ledit dispositif comprenant également des moyens formant diaphragme (45) reliés auxdits moyens de liaison (38; 53) pour appliquer auxdits moyens de liaison (38; 53) une force variable en fonction dudit signal de différentiel de pression.

13. Dispositif tel que défini dans l'une quelconque des revendications 1, 2, 3 et 4, installé dans un système d'induction d'air de moteur et appliqué à un réglage de pression de carburant à partir d'une pompe entraînée par moteur ou électrique, dans lequel lesdits moyens de réglage de pression de carburant sont sensibles à une sortie de celle-ci et règlent une pression de carburant en direction d'injecteurs au niveau de chaque passage d'admission de cylindre, lesdits injecteurs étant ouverts et fermés séquentiellement par des moyens synchronisés avec la course d'admission de chaque cylindre, pour ainsi assurer un rapport carburant sur air optimal dans un système d'injection de carburant synchronisée pour un moteur à combustion interne.

14. Dispositif tel que défini dans l'une quelconque des revendications 1, 2, 3 et 4, installé dans un système d'induction d'air de moteur et appliqué à un réglage de pression de carburant à partir d'une pompe entraînée par moteur ou électrique, dans lequel lesdits moyens de réglage de pression de carburant sont sensibles à une sortie de celle-ci et règlent une pression de carburant en direction d'injecteurs dans chaque cylindre ou dans la chambre de combustion de celui-ci, lesdits injecteurs étant ouverts et fermés séquentiellement par des moyens synchronisés avec la course de compression des cylindres, pour ainsi assurer un rapport carburant sur air optimal dans des moteurs à combustion interne (Diesel) à allumage par compression.

15. Dispositif tel que défini dans la revendication 13 ou la revendication 14, dans lequel lesdits injecteurs sont des injecteurs pulvérisateurs à soupapes électriques.
